Europäisches Patentamt

European Patent Office

Office européen des brevets

(11) Publication number: **0 409 492 B1**

# EUROPEAN PATENT SPECIFICATION

(45) Date of publication of patent specification: **24.08.94**  (51) Int. Cl.5: **C08F 210/06**, C08F 4/654

(21) Application number: **90307662.8**

(22) Date of filing: **12.07.90**

(54) **Elastomeric propylene copolymers and process for manufacturing them in gas phase.**

(30) Priority: **17.07.89 FR 8909823**

(43) Date of publication of application:
**23.01.91 Bulletin 91/04**

(45) Publication of the grant of the patent:
**24.08.94 Bulletin 94/34**

(84) Designated Contracting States:
**AT BE CH DE DK ES FR GB GR IT LI LU NL SE**

(56) References cited:
**EP-A- 0 099 774**
**EP-A- 0 321 218**
**EP-A- 0 336 545**
**EP-A- 0 338 676**
**GB-A- 2 052 534**

(73) Proprietor: **BP Chemicals Limited**
**Britannic House**
**1 Finsbury Circus**
**London EC2M 7BA (GB)**

(72) Inventor: **Bailly, Jean-Claude Andre**
**Residence Les Platanes,**
**10 rue Amavet**
**F-13500 Martigues (FR)**
Inventor: **Bres, Philippe**
**59 la Jonquiere**
**F-13270 Fos-sur-Mer (FR)**

(74) Representative: **Denbigh, Keith Warwick et al**
**BP INTERNATIONAL LIMITED**
**Patents Division**
**Chertsey Road**
**Sunbury-on-Thames Middlesex, TW16 7LN**
**(GB)**

## Description

The present invention relates to elastomeric copolymers of propylene with ethylene and/or 1-butene and optionally with one or more alpha-olefins containing from 5 to 12 carbon atoms, and to a gas phase process for manufacturing them. The process employs a catalyst system which is highly active and stereospecific in the copolymerization of propylene.

According to French Patent No. 2,460, 964 it is known to prepare weakly crystalline elastomeric propylene copolymers by a gas phase copolymerization process comprising a prepolymerization stage. This process employs a catalyst system comprising, on the one hand, one or more solid titanium compounds as catalyst obtained by reducing titanium tetrachloride with an organoaluminium compound and, on the other hand, one or more organometallic compounds as cocatalyst. However, this catalyst system exhibits the enormous disadvantage of having a weak activity in the gas phase copolymerization of olefins, in particular in propylene copolymerization. Because of this, the copolymerization process must be carried out at relatively high partial pressures of the olefins to be copolymerized. Nevertheless, the activity of the catalyst system remains weak, and it is observed that the copolymers manufactured have high contents of catalyst residues, especially of titanium. Furthermore, it is found that the copolymers are manufactured in copolymerization reactors with relatively long residence times, and this results in a low production efficiency of the process. It is observed, moreover, that the copolymer particles being formed may be relatively sticky in nature and may have a tendency to form agglomerates of copolymer. This is particularly awkward and can result in the stoppage of the copolymerization reaction.

EP 99774 describes a process for preparing alpha-olefin polymers in the gas phase involving contact with a Ziegler catalyst system consisting of a halogen/magnesium/transition metal catalyst and a cocatalyst consisting of an organometallic compound. The process comprises a first prepolymerisation stage producing a prepolymer in the form of particles and a second stage under gas phase conditions in a fluidised bed to produce polymers in the form of a powder having a specific particle size.

A new gas phase process for the manufacture of propylene copolymers of low crystallinity has now been found. This process employs a catalyst system which simultaneously exhibits a high activity, a stereospecific nature in the polymerization of propylene by itself, and an ability to polymerize ethylene and propylene at similar rates. Because of the use of a highly active catalyst system, this process enables the disadvantages referred to above to be avoided. In particular, it makes it possible to manufactue, at a high production efficiency, copolymers which have a very low catalyst residue content, while avoiding the formation of copolymer agglomerates.

The subject of the present invention is therefore a gas phase process for the manufacture of copolymers containing, on a weight basis, 20% to 80% of propylene and 80% to 20% of ethylene and/or of 1-butene and optionally of one or more alpha-olefins containing from 5 to 12 carbon atoms, which process is characterized in that

1) it employs a catalyst of the Ziegler Natta type, obtained by bringing a magnesium dichloride support successively into contact with at least one electron-donor compound containing labile hydrogen $D_2$ and with an electron-donor compound $D_3$ chosen from aromatic carboxylic acid esters, and then by impregnation and activation of the support, which are produced by at least two successive operations bringing the support into contact with titanium tetrachloride in a molar quantity which is in excess relative to magnesium dichloride, which are separated by a washing with a liquid hydrocarbon, the said support being initially preactivated with an organic electron-donor compound $D_1$ free from labile hydrogen and consisting of 80 to 99 mol% of magnesium dichloride and 1 to 20 mol% of $D_1$, and being in the form of spherical particles which have a mass-mean diameter of 5 to 100 microns and a particle size distribution such that the ratio of the mass-mean diameter, Dm, to the number-mean diameter, Dn, is lower than 2 and a spherical shape defined by the fact that if D and d are respectively the large and small axis of these particles the ratio D/d is less than or equal to 1.5,

2) and it comprises, in a first stage, a prepolymerization by bringing the said catalyst into contact with (i) at least one alpha-olefin containing from 2 to 12 carbon atoms, (ii) an external electron-donor compound $D_4$ and (iii) a cocatalyst (A) consisting of a trialkylaluminium and optionally of a small quantity of an alkylaluminium halide, and in a second stage, a gas phase copolymerization reaction performed by bringing the prepolymer prepared previously into contact with a mixture comprising propylene, ethylene and/or 1-butene, and optionally an alpha-olefin containing from 5 to 12 carbon atoms, in a proportion such that propylene represents from 20% to 80% of the total volume of the olefins to be copolymerized.

According to the present invention, it is essential, in a first stage, to prepare a prepolymer with the aid of a catalyst system consisting of a catalyst, a cocatalyst and an external electron-donor compound $D_4$. The catalyst comprises a particular support based on magnesium dichloride which enables the catalyst to have a relatively high content of titanium and an extremely high activity in the copolymerization of propylene. This particular support is said to be pre activated with an organic electron-donor compound, $D_1$, which is present in a relatively large quantity in the magnesium dichloride. The organic electron-donor compound $D_1$ is known as such or as a Lewis base, especially one which has a relatively weak ability to complex magnesium dichloride. The compound $D_1$ is advantageously chosen from mild complexing agents such as ethers, thioethers, amines, amides, sulphones, sulphoxides and phosphines. It cannot be chosen from agents capable of reacting with one of the products employed for preparing the support or the catalyst. In particular, the compound $D_1$ cannot be chosen from electron-donor compounds containing labile hydrogen such as water, alcohols or phenols, or from aromatic acid esters. The organ electron-donor compound $D_1$ is preferably an ether.

The preactivated support is characterized in that it contains a relatively large quantity of the organic electron-donor compound $D_1$. The preactivated support composition comprises from 80 to 99 mol% of magnesium dichloride and from 1 to 20 mol% of compound $D_1$. However, in order to obtain a high-activity catalyst with a high titanium content, it advantageously comprises from 80 to 95 mol% of magnesium dichloride and from 5 to 20 mol% of compound $D_1$ and more particularly from 80 to 90 mol% of magnesium dichloride and from 10 to 20 mol% of compound $D_1$. It has been found that the catalysts are the most active when the preactivated support is in the form of a homogeneous composition comprising magnesium dichloride and compound $D_1$, that is to say a composition where the compound $D_1$ is distributed uniformly throughout the magnesium dichloride particle, in particular from the core to the periphery thereof. From this, it follows that to obtain such a preactivated support it is recommended to prepare it according to methods emloying preciptitation reactions and not merely operations of bringing into contact, such as those performed by milling.

It has been found, furthermore, that the preactivated support yields high-performance catalysts with a high titanium content, capable particularly of withstanding enormous growth stresses during the copolymerization, when it has an essentially amorphous structure, that is to say a structure where the crystalline forms of magnesium dichloride, determined with the aid of an x-ray diffraction analysis, have disappeared for the most part, or otherwise completely.

The preactivated support is, moreover, characterized in that it consists of spherical particles. The spherical shape of these particles is defined by the fact that, if D and d are respectively the large and the small axis of these particles, the ratio D/d is less than or equal to 1.5, preferably to 1.3. These particles have a mass-mean diameter of 5 to 100 microns, preferably from 20 to 50 microns. The particles have a very narrow particle size distribution, such that the Dm/Dn ratio of the mass-mean diameter, Dm, to the number-mean diameter, Dn, is lower than 2. More particularly, the particle size distribution of these particles may be extremely narrow, such that the Dm/Dn ratio is from 1.1 to 1.5; a practically complete absence of particles with a diameter greater than 1.5 x Dm or smaller than 0.6 x Dm is observed; the particle size distribution can also be assessed by the fact that more than 90% by weight of the particles of the same single batch lie within the range Dm ± 10%.

The specific surface of the preactivated support particles may be from 20 to 100 $m^2$/g (BET), preferably from 30 to 60 $m^2$/g (BET) and the relative density of these particles may range approximately from 1.2 to 2.1.

The preactivated support employed in the present invention may be prepared especially by reacting a dialkylmagnesium compound with an organic chlorine compound, in the presence of the organic electron-donor compound $D_1$. A compound of formula $R_1MgR_2$, in which $R_1$ and $R_2$ are identical or different alkyl radicals containing from 2 to 12 carbon atoms, may be chosen as a dialkylmagnesium compound. One of the important properties of this dialkylmagnesium compound is that it is soluble as such in the hydrocarbon medium where the prepartion of the support will be performed. The organic chlorine compound which is chosen is an alkyl chloride of formula $R_3Cl$ in which $R_3$ is a secondary or, preferably, tertiary alkyl radical containing from 3 to 12 carbon atoms. It is preferred to employ as an organic electron-donor compound $D_1$ an ether of formula $R_4OR_5$ in which $R_4$ and $R_5$ are identical or different alkyl radicals containing from 1 to 12 carbon atoms.

In addition, the various reactants employed for preparing the preactivated support must be employed in the following conditions:

-   the molar ratio $R_3Cl/R_1MgR_2$ is from 1.5 to 2.5, preferably from 1.95 to 2.2
-   the molar ratio $D_1/R_1MgR_2$ is from 0.1 to 1.2, preferably from 0.3 to 0.8.

The reaction between $R_1MgR_2$ and $R_3Cl$, in the presence of the organic electron-donor compound $D_1$, is a precipitation which takes place within a liquid hydrocarbon, with stirring. A person skilled in the art knows that, in this case, physical factors such as the viscosity of the medium, the stiring method and rate and the conditions of employing the reactants, can play an immportant part, everything else being equal, in

3

the form, the structure, the size and the particle size distribution of the precipitated particles. However, to obtain the preactivated support employed in the present invention and characterized especially by an essentially amorphous structure, it is recommended to perform the precipitation reaction at a relatively low temperature, ranging from 10 to 80°C, preferably from 10 to 50°C, and more particularly from 15 to 35°C. It is recommended, furthermore, that the precipitation reaction should take place extremely slowly, over a period of at least 2 hours, preferably a period ranging from 10 to 24 hours, so as to permit a suitable organization of the solid product which is formed, in particular the entry of a large quantity of the compound $D_1$ and its uniform dispersion in the precipitated solid. Preferably, the preactivated support contains substantially no Mg-C bond.

The actual preparation of the catalyst from the preactivated support thus defined normally comprises the four successive stages which consist:

(m) in treating the preactivated support with at least one electron-donor compound containing labile hydrogen, $D_2$,

(n) in treating the support obtained previously with at least one internal electron-donor compound $D_3$ chosen from the esters of an aromatic carboxylic acid,

(p) in impregnating the support thus treated with titanium tetrachloride in a molar quantity which is in excess relative to magnesium dichloride, and then removing the unimpregnated titanium tetrachloride by at least one washing with the aid of a liquid hydrocarbon, and

(q) in subjecting the support thus impregnated to an activation treatment by contacting it with titanium tetrachloride, and then washing the support thus treated with the aid of a liquid hydrocarbon.

More particularly, in stage (m), the treatment of the preactivated support is carried out with the aid of an electron-donor compound containing labile hydrogen, $D_2$, in order to obtain a support capable of subsequently fixing a large quantity of titanium tetrachloride. In actual fact, this treatment consists in producing, within the preactivated support, an exchange between the organic electron-donor compound $D_1$ and the electron-donor compound containing labile hydrogen $D_2$, in such conditions as to make this exchange practically complete without, however, modifying the structure of the support. In particular, the compound $D_2$ exhibits a complexing capacity towards magnesium dichloride which may be greater than that of compound $D_1$.

The electron-donor compound containing labile hydrogen, $D_2$, is advantageously chosen from water, alcohols and phenols. An alcohol containing from 1 to 12 carbon atoms is preferably employed. More particularly, the compound $D_2$ is chosen from ethanol, propanol, n-butanol, n-pentanol and n-hexanol.

This treatment is advantageously carried out without it being possible to observe the least crystallization of the support or any crumbling whatever of the particles. In particular, it is performed by bringing the preactivated support into contact with the compound $D_2$, employed in a quantity of between 0.2 and 1.2 moles, preferably between 0.5 and 1.0 mole per mole of magnesium dichloride. In addition, it is particularly recommended that the operation of bringing into contact be performed at a temperature of 0°C to 50°C, preferably from 10°C to 35°C, to enable the exchange to take place wihtout any appreciable modification of the initial preactivated support. Furthermore, it is advantägeous to perform this operation of bringing into contact within a liquid hydrocarbon such as n-hexane, with stirring. In practice, this operation of bringing into contact can be performed in various possible ways, for example by adding the compound $D_2$ to the preactivated support suspension which is kept stirred in a liquid hydrocarbon. It is generally observed that all the compound $D_2$ employed in this treatment is fixed in the support and substantially no change in the amorphous structure and in the morphology of the support is detected. The support thus treated with the compound $D_2$ may be washed one or more times with a liquid hydrocarbon, such as n-hexane, before proceeding to the next stage.

More particularly, in stage (n), the electron-donor compound $D_3$ is an aromatic carboxylic acid ester which is advantageously chosen from ethyl benzoate, methyl para-toluate and dibutyl or diisobutyl phthalate. The treatment with the aromatic carboxylic acid ester is performed in such conditions that the structure and the morphology of the support are not appreciably modified. In particular, it is performed by bringing the substrate into contact with the aromatic carboxylic acid ester in a quantity of between 0.1 and 1 mole, preferably between 0.2 and 0.8 moles per mole of magnesium dichloride. In addition, it is recommended to perform this operation of bringing into contact at a temperature of 10°C to 60°C, preferably from 20°C to 50°C, so as not to modify the morphology of the support appreciably. It is advantageous to perform this operation of bringing into contact within a liquid hydrocarbon, such as n-hexane, with stirring. In practice, the operation of bringing into contact may be performed in various possible ways, in particular by adding the aromatic carboxylic acid ester to the suspension of support which is kept stirred in a liquid hydrocarbon. If appropriate, the support thus treated may be washed one or more times with a liquid hydrocarbon, such as n-hexane, before proceeding to the next stage.

4

In stage (p), the support treated with the aromatic carboxylic acid ester is impregnated with titanium tetrachloride, which may be employed pure or in solution in a liquid hydrocarbon, such as n-hexane. This impregnation is performed by bringing the support into contact with titanium tetrachloride in a quantity of between 2 and 20 moles, preferably between 5 and 15 moles per mole of magnesium dichloride. In addition, it is recommended that the impregnation be performed at a temperature ranging from $20°C$ to $120°C$, and preferably from $70°C$ to $100°C$, to enable the support to retain a relatively amorphous structure which enables it to withstand suitably the high growth stresses during polymerization. In addition, it is advantageous to perform this impregnation with stirring, and within a liquid hydrocarbon, such as n-hexane. In practice, the impregnation may be performed in various ways, in particular by adding titanium tetrachloride to the support suspension, kept stirred in a liquid hydrocarbon. The support thus impregnated is advantageously washed one or more times with a liquid hydrocarbon such as n-hexane, in order to remove the excess titanium tetrachloride not impregnated into the support, before proceeding to the next stage.

In stage (q), the support prepared in stage (p) is subjected to an activation treatment with titanium tetrachloride. This treatment consists in bringing the titanium-impregnated solid into contact with titanium tetrachloride, employed pure or in a solution in a liquid hydrocarbon such as n-hexane. The quantity of titanium tetrachloride employed is from 2 to 20 moles, preferably from 5 to 15 moles per mole of magnesium dichloride. In addition, it is recommended to perform the operation of bringing into contact at a temperature ranging from 20 to $120°C$, and preferably from 70 to $120°C$. It is advantageous to perform the activation stage in a liquid hydrocarbon such as n-hexane, with stirring. In practice, the operation of bringing into contact may be performed in various ways, in particular by adding titanium tetrachloride to the suspension of titanium-impregnated solid in a liquid hydrocarbon and by keeping the mixture thus obtained stirred for a period ranging from 0.5 to 10 hours, preferably from 1 to 4 hours. The solid thus treated is advantageously washed one or more times with a liquid hydrocarbon, such as n-hexane. The activation treatment may consist of one or more such operations of bringing into contact. The support thus treated may contain from 4 to 10 mol% of titanium per mole of magnesium.

According to the invention, the catalyst system employed for preparing the prepolymer comprises, in addition to the catalyst described above, a cocatalyst (A) and an external electron-donor compound $D_4$. The cocatalyst (A) is a trialkylaluminium, optionally employed in combination with an alkylaluminium halide. In this latter case, in order to retain the stereospecific nature of the catalyst system, the alkylaluminium halide is preferably employed in a small quantity, in particular in a quantity such that the molar ratio of the trialkylaluminium to the alkylaluminium halide is equal to or higher than 2/1. The trialkylaluminium may consist of one or more compounds of general formula $A1R_3$ in which R is an alkyl radical containing from 1 to 8 carbon atoms and is advantageously chosen from triethylaluminium, triisobutylaluminium, tri-n-hexylaluminium and tri-n-octylaluminium. The alkylauminium halide advantageously corresponds to the general formula $A1X_nR_{3-n}$ in which X is a chlorine or bromine atom, R is an alkyl radical containing from 1 to 8 carbon atoms, and n is an integral or fractional number equal to or greater than 0.5 and smaller than 3, preferably equal to or greater than 1 and smaller than or equal to 2. The alkylaluminium halide may consist of one or more organoaluminium compounds whose general formula corresponds to that mentioned above. It is advantageously chosen from diethylaluminium monochloride, ethylaluminium sesquichloride and diisobutylaluminium monochloride.

The relative molar quantities of the cocatalyst (A) relative to the titanium present in the catalyst are such that the molar ratio A1/Ti can vary from 1 to 10 and preferably from 2 to 5. It has been observed, in fact, that when this ratio A1/Ti is smaller or larger, the catalyst system loses its stereospecificity and a prepolymer of a sticky nature can be obtained, which exhibits, in particular, an excessively large fraction soluble in boiling n-heptane, generally larger than 10%. Furthermore, when this ratio is lower, the activity of the catalyst system weakens.

The external electron-donor compound $D_4$ of the catalyst system employed for the prepolymerization may be chosen from aromatic carboxylic acid esters and organic silicon compounds such as O-containing silane derivatives. In particular, the aromatic carboxylic acid ester may be ethyl benzoate, or methyl para-toluate. The O-containing silane may be an alkyl/phenyl alkoxysilane, responding to the general formula $R_m Si(OR')_{4-n}$ in which R is an alkyl or aryl radical containing from 1 to 10 carbon atoms, $R^1$ is an alkyl radical containing from 1 to 6 carbon atoms and n is an integral number from 1 to 3. Preferably, the O-containing silane is phenyltriethoxysilane, diphenyldiethoxysilane or cyclohexyl methyl dimethoxysilane. The molar ratio of the external electron-donor compound $D_4$ to the cocatalyst (A) is at least 0.1 and not more than 0.8, preferably close to 0.3. An insufficient quantity of the external electron-donor compound $D_4$ lowers the stereospecificity of the catalyst system, while an excessively large quantity weakens the activity of the catalyst system.

According to the invention, a prepolymer is prepared by polymerizing or by copolymerizing an alpha-olefin containing 2 to 12 carbon atoms, in the first stage of the process. This alpha-olefin may be chosen from ethylene, propylene, 1-butene, 1-hexene, 4-methyl-1-pentene, 1-octene and 1-dodecene. However, in order to obtain a prepolymer which can be easily handled and which is not particularly sticky, it is advantageous to prepare it by polymerizing propylene by itself or a mixture of alpha-olefins containing at least 80%, and preferably 90 mol% of propylene. It may also be advantageous to prepare a prepolymer by polymerizing ethylene by itself or a mixture of alpha-olefins containing at least 80%, preferably 90 mol% of ethylene.

The prepolymerization stage may be performed in one or more consecutive stages, and is stopped when the prepolymer contains from 0.1 g to 500 g, preferably from 10 g to 400 g and more particularly from 100 g to 300 g, of prepolymer per millimole of titanium. During this stage the prepolymer may be prepared in suspension in liquid propylene at a temperature ranging from $0°C$ to $80°C$, preferably from $10°C$ to $30°C$. It may also be prepared in suspension in a saturated liquid hydrocarbon such as n-hexane or n-heptane, at a temperature ranging from $20°C$ to $80°C$, preferably from $30°C$ to $65°C$. Furthermore, the prepolymer may be prepared in the gaseous phase for example in a reactor containing a mechanically stirred and/or fluidised bed, at a temperature ranging from $10°C$ to $60°C$, preferably from $25°C$ to $40°C$, and at a total pressure ranging from 0.1 to 5 MPa. Whatever the method of preparing the prepolymer, to control the quantity of prepolymer which is prepared it is desirable to perform the prepolymerization in such conditions that the rate of prepolymerization is relatively slow. This rate is generally lower than or equal to 150 g of olefin per hour and per millimole of titanium of the catalyst. This rate may be modified, especially by means of the temperature of prepolymerization or the relative quantities of catalyst and of cocatalyst.

The main effects of the prepolymerization stage performed according to the present invention are to conform scrupulously to the spherical form of the preactivated support, without modifying its particle size distribution, and to prepare a prepolymer exhibiting advantageous and improved properties with a view to the subsequent stage of gas phase copolymerization. The advantageous and improved properties of the prepolymer concern especially an excellent mechanical strength and a remarkable resistance to abrasion and to shattering of the particles subjected to enormous growth stresses during the subsequent copolymerization stage. Because of the presence of the electron-donor compoound $D_4$ in the prepolymer, the latter has a controlled activity during the copolymerization reaction, and this makes it possible to manufacture copolymers of a nonsticky nature, without the formation of agglomerates.

Moreover, an astonishing effect of the present invention concerns the fact that it is possible to prepare a prepolymer which is in the form of a powder consisting of nonsticky particles. This prepolymer powder, therefore, has very good flow properties and, as a result can be easily handled for the subsequent copolymerization stage. Furthermore, when the prepolymer is prepared in suspension in a liquid, it is found that the liquid-soluble fraction of prepolymer is very low. This presents the enormous advantage of making it possible to avoid a prepolymer extraction and washing operation and thus making it possible to employ the prepolymer in suspension directly for the second stage of the process.

Another surprising aspect of the present invention consists in that the prepared prepolymer retains from the catalyst system both its high activity and its ability to polymerize propylene and ethylene at similar rates.

During the second stage of the process, a gas phase copolymerization reaction is performed by bringing the prepolymer prepared beforehand into contact with a gaseous mixture containing propylene, ethylene and/or 1-butene and optionally an alpha-olefin containing from 5 to 12 carbon atoms and capable of being chosen from 4-methyl-1-pentene, 1-hexene, 1-octene, 1-decene or 1-dodecene. The olefins to be copolymerized which are present in the gaseous mixture are in a proportion such that propylene represents from 20% to 80% particularly from 25% to 70%, or from 25% to 65%, preferably from 28% to 60% and more particularly from 35% to 60% by volume of these olefins. In addition to the olefins to be copolymerized, the gaseous mixture may contain an inert gas, such as nitrogen, ethane, propane or isopentane, and a chain-limiting agent, such as hydrogen.

The actual copolymerization reaction may be performed in gaseous phase in a reactor containing a mechanically stirred bed. It may also be performed in a reactor containing a fluidised bed in which the copolymer particles being formed are kept in the fluidised state with the aid of an upward stream of gas propelled at a velocity of 2 to 10 times, preferably 5 to 8 times, the minimum fluidisation velocity, that is to saty generally of between 15 to 80 cm/s, preferably of between 40 and 60 cm/s. The gas stream leaves the fluidised-bed reactor and passes through a cooling system intended to remvoe the heat produced during the copolymerization reaction, before being recycled into the fluidised-bed reactor by means of a compressor. The mean pressure in the copolymerization reactor may be close to atmospheric pressure, but is preferably higher, in order to increase the copolymerzation rate. It may be between 0.1 and 5 MPa, preferably between 0.2 and 2 MPa. The copolymerization temperature is lower than the softening temperature of the copolymer manufactured and is generally between 0°C and 60°C, preferably between 10°C and 50°C. The conditions of gas phase copolymerization are advantageously such as to make the rate of copolymerization not to high to avoid the phenomena of sticking in the copolymerization reactor, which can result in the formation of agglomerates of copolymer. This rate may be modified by means of the copolymerization temperature or by means of the quantity of prepolymer which is employed.

In practice, to perform the gas phase copolymerization reaction, the prepolymer is introduced into the copolymerization reactor in order to be brought into contact with the gaseous mixture containing the olefins to be copolymerized. The prepolymer is introduced into the reactor in the form of a dry powder or in suspension in an inert liquid hydrocarbon or in liquid propylene. This introduction of prepolymer can be performed continuously or intermittently.

The prepolymer employed may be activated with the aid of a cocatalyst (B) which is identical with or different from the cocatalyst (A). This cocatalyst (B) is an organoaluminium compound and may be a trialkylaluminium, an alkylaluminium halide or a mixture of both. In particular, it may be chosen from triethylaluminium, tri-n-propylaluminium and triisobutylaluminium. It may be introduced into the copolymerization reactor by any known methods, in particular in the pure state or diluted in one or more alpha-olefins or in a saturated aliphatic hydrocarbon. This cocatalyst (B) may be introduced into the copolymerization reactor in the liquid state or may be completely converted into the gaseous state, especially when it is highly volatile. The activation of the prepolymer by the cocatalyst (B) may be performed before the prepolymer is introduced into the copolymerization reactor and in particular into the prepolymer entry conduit.

The quantity of cocatalyst (B) is such that the molar ratio of the quantity of aluminium in the cocatalyst (B) to the quantity of titanium in the prepolymer is between 0.5 and 100, preferably between 1 and 20.

In addition to the cocatalyst (B), an elctron-donor compound $D_5$ which is identical with or different from the compound $D_3$ or $D_4$ may be employed. More particularly, when the external electron-donor compound $D_4$ used during the prepolymerisation is an organic silicon compound, such as a O-containing silane derivative, the compound $D_5$ preferably is an organic silicon compound, identical to or different from the compound $D_4$. When the external electron-donor compound $D_4$ is an aromatic carboxylic acid eater, the compound $D_5$ preferably is an aromatic carboxylic acid ester identical to or different from the compound $D_4$ or the compound $D_3$. This compound $D_5$ may be advantageously added to the prepolymer before it is introduced into the copolymerization reactor. It may also be introduced into the copolymerization reactor by itself or mixed with the cocatalyst (B). It is employed in a quantity such that the molar ratio of the cocatalyst (B) to the compound $D_5$ is between 5 and 100.

The elastomeric propylene copolymers, obtained according to the present invention, are new. They consist of copolymers of propylene with ethylene and/or 1-butene, and optionally with at least one $C_5$-$C_{12}$ alpha-olefin, containing from 20% to 80%, preferably from 25% to 70% by weight of propylene.

More particularly, they consist of copolymers of propylene with ethylene and optionally with at least one $C_{4-12}$ alpha-olefin. They contain from 25% to 65%, preferably from 28% to 60% and more particularly from 35% to 60% by weight of propylene. They have a very low content of catalyst residues based on magnesium, halogen, titanium and aluminium. More particularly, they have a titanium content from 1 to 20, preferably from 1 to 10 parts per million by weight (ppm). The copolymers have an intrinsic viscosity (expressed in polyethylene and measured at 135°C in decalin) from 2 to 11 dl/g, preferably from 2.5 to 8 dl/g. The viscosimetric molecular mass of these copolymers ranges from 100,000 to 1,000,000, preferably from 150,000 to 700,000. The copolymers also are characterised by a molecular mass distribution relatively broad, ranging from 5 to 15, preferably from 6 to 13, as measured by the ratio of the weight-average molecular mass Mw (expressed in polyethylene) to the number-average molecular mass Mn.

The elastomeric propylene copolymers of the present invention are also characterised by a low crystallinity, determined by differential scanning calorimetry (DSC).

Differential scanning calorimetric analysis consists in recording the enthalpy graph of a sample of 5 mg of the copolymer by heating at the speed of 16°C per minute up to 200°C, the sample having been previously subjected to a thermal treatment consisting of heating at the speed of 16°C per minute up to 200°C, followed by maintenance at this temperature for 20 minutes and cooling at the speed of 16°C per minute down to 50°C; the area of the endothermal peak recorded during the heating is proportional to the fusion enthalpy. This differential scanning calorimetry analysis therefore enables the measurement of the fusion enthalpy of the copolymer corresponding to the quantity of heat necessary to melt 1 gramme of the copolymer. This quantity of heat is related to the spatial arrangement of the copolymer, it being higher, the more the structure of the copolymer is ordered. Thus, the fusion enthalpy of high-density polyethylene, whose crystallinity degree is 100%, is 280 J/g under the measuring conditions described above, and that of isotactic polypropylene, whose crystallinity degree is 100%, is 210J/g, under the same conditions. It is observed that the copolymers of the invention possess a fusion enthalpy such that they have a crystallinity of polyethylene type from 2 to 10% and a crystallinity of polypropylene type lower than 1%.

Also they are characterised in their macromolecular structure by the absence of structural inversion of propylene units of the head-to-head or tail-to-tail type:

The density of these copolymers is higher than 0.850 and lower than 0.890.

The elastomeric propylene copolymers are directly obtained from a gas phase polymerization reactor, under the form of a powder having a bulk density from 0.35 to 0.52 $g/cm^3$, preferably from 0.40 to 0.50 $g/cm^3$. The powder consists of non-sticky particles having a spherical shape, such as previously defined, a mass mean diameter Dm ranging from 250 to 1000 microns, preferably from 400 to 800 microns, and a very narrow particle size distribution defined by the ratio between Dm and the number mean diameter Dn of the copolymer particles, which is lower than 3.0, preferably lower than 2.5.

Method of determining the molecular mass distribution of the copolymer.

The molecular mass distribution of the copolymer is calculated by the ratio of the weight-average molecular mass, Mn, of the copolymer, from a curve of molecular mass distribution obtained by means of a gel permeation chromatograph, known under the trademark (Registered Trade Mark) "WATERS 150°C" (High Temperature Size Exclusion Chromatograph), the operating conditions being the following:

- solvent: 1,2,4 trichlorobenzene
- solvent flow rate: 1 ml/minute
- three columns under trademark "SHODEX AT 80 M/S"
- temperature 150°C
- copolymer concentration: 0.1% by weight
- injection volume: 500 microlitres
- detection by refractometer and calibration with the help of a high density polyethylene, sold by BP CHEMICALS, under the trademark "RIGIDEX 6070 EA" (Registered Trade Mark): Mw = 65,000 and Mw/Mn = 4 and a high density polyethylene having Mw = 210,000 and Mw/Mn = 17.5.

Method of determining the mass (Dm) and number (Dn) mean particle diameters.

According to the invention, the mass (Dm) and number (Dn) mean diameters of the support or catalyst particles are measured using microscopic observations by means of the Optomax image analyser (Micro-Measurements Ltd, Great Britain). The principle of the measurement consists in obtaining, from an experimental study of a particle population, using optical microscopy, a table of sizes, where the number ($n_i$) of particles belonging to each class (i) of diameters is given, each class (i) being characterised by an intermediate diameter ($d_i$) included between the limits of each class. According to the approved French Standard NF X 11-630 of June 1981, Dm and Dn are given by the following formulae:

Mass mean diameter:

$$Dm = \frac{\sum n_i (d_i)^3 d_i}{\sum n_i (d_i)^3}$$

Number mean diameter:

$$Dn = \frac{\sum n_i \cdot d_i}{\sum n_i}$$

The ratio Dm/Dn characterises the particle size distribution; it is sometimes called "width of particle size distribution". The measurement using the Optomax image analyser is performed by means of an inverted microscope which allows the suspensions of support or catalyst particles to be examined with a magnification of between 16 and 200 times. A television camera picks up the images given by the inverted microscope and transmits them to a computer which analyses the images received line by line and point by point on each line, with a view to determining the particle dimensions or diameters, and then classifying them.

The following nonlimiting examples illustrate the invention.

Example 1

Preparation of a preactivated support

10.2 litres of a mixture containing 10 moles of dibutylmagnesium in n-hexane, 6.45 litres of n-hexane and, lastly, 1 litre of diisoamyl ether are introduced in succession in the course of a first stage, under nitrogen, at ambient temperature (25°C), into a 30-litre stainless steel reactor equipped with a stirring system rotating at a rate of 600 revolutions per minute and with a jacket. In a second stage, where the speed of the stirring system is maintained at 600 revolutions per minute and the reaction temperature at 25°C, 2.4 1 of tert-butyl chloride are added at a constant rate for 12 hours to the mixture thus obtained. At the end of this time, the reaction mixture is kept at 25°C for 3 hours. The precipitate obtained is washed with 15 litres of n-hexane. The washing of the precipitate is repeated 6 times. The solid product obtained forms the preactivated support (A) based on magnesium dichloride, containing 12 mol% of diisoamyl ether relative to the magnesium dichloride. When examined by microscope, the preactivated support (A) has the form of spherical particles with a mass mean diameter of 21 microns and an extremely narrow particle size distribution, such that the ratio Dm/Dn of the particles is equal to 1.4.

The specific surface of the preactivated support (A) is approximately 45 $m^2$/g (BET). The structure of the magnesium dichloride in the preactivated support is completely amorphous.

Example 2

Preparation of a catalyst

A suspension of the preactivated support (A) prepared previously in Example 1, containing 4 moles of magnesium dichloride in 6 litres of n-hexane, is introduced under a nitrogen atmosphere into a 30-litre stainless steel reactor, equipped with a stirring system rotating at 350 revolutions per minute. 18 litres of n-hexane, followed slowly, over 30 minutes, by 0.365 litres of n-butanol, are added to this suspension, which is kept stirred at ambient temperature (25°C). The activated support suspension thus obained is then kept stirred for 1 hour at 25°C. At the end of this time the stirring is stopped, the activated support is allowed to settle, the supernatant liquid phase is removed and the activated support is resuspended with stirring in 6 litres of n-hexane.

In a second stage, 10 litres of n-hexane are added to the last suspension of activated support, kept at 25°C with stirring, followed slowly, over 30 minutes, by 0.46 litres of ethyl benzoate. The suspension of the support thus treated is kept stirred at 25°C for 1 hour. At the end of this time, the stirring is stopped, the treated support is allowed to settle, the supernatant liquid phase is removed and the treated support is subjected to 3 successive washings, each employing 20 litres of n-hexane at 25°C, each washing consisting in keeping the suspension stirred for 15 minutes, in then allowing the treated support to settle for 20 minutes, in drawing off the supernatant liquid phase and in resuspending the treated support. Finally, the treated support is resuspended in 6 litres of n-hexane.

In a third stage, 6 litres of titanium tetrachloride are added to the last suspension of treated support, kept stirred at 25°C. The suspension thus obtained is heated to 100°C and is kept stirred at this temperature for 2 hours. At the end of this time, the support suspension thus impregnated is cooled to 50°C with stirring, then the stirring is stopped, the impregnated support is allowed to settle, the supernatant liquid phase is removed and the impregnated support is subject to 3 successive washings, 20 litres of n-hexane at 50°C being employed each time, followed by 2 successive washings, 20 litres of n-hexane at 25°C being employed each time. The impregnated support (B) is finally resuspended in 6 litres of n-hexane at 25°C. It consists of spherical particles containing 6 atom% of titanium per atom of magnesium.

In a fourth stage, 9 litres of titanium tetrachloride are added to the last suspension of impregnated support (B), kept stirred at 25°C. The suspension thus obtained is heated to 100°C and is kept stirred at this temperature for 2 hours. At the end of this time, the catalyst suspension thus obtained is cooled to 50°C with stirring, then the stirring is stopped, the catalyst is allowed to settle, the supernatant liquid phase is removed, and the catalyst is subjected to 3 successive washings, 20 litres of n-hexane at 50°C being employed each time, followed by 4 successive washings, 20 litres of n-hexane at 25°C being employed each time.

The catalyst (C) is isolated and stirred under a nitrogen atmosphere. It contains 6.5 atom% of titanium per atom of magnesium and consists of spherical particles which have a mass-mean diameter Dm of 21 microns and a particle size distribution such that the ratio Dm/Dn of the particles is 1.4.

Example 3

Preparation of a propylene prepolymer in suspension in n-hexane

400 litres of n-hexane, 1.09 moles of triethyl-aluminium, 0.545 moles of diethylaluminium chloride, 0.41 moles of methyl para-toluate and a quantity of the catalyst (C) prepared in Example 2 containing 0.41 moles of titanium are introduced successively into a 1-m³ stainless steel reactor equipped with a stirring device rotating at the rate of 140 revolutions per minute, kept under a nitrogen pressure and at a temperature of 60°C, followed by liquid propylene at a uniform rate of 18 kg/hour. At the end of 4 hours and 20 minutes of reaction the content of the reactor is transferred to a dryer in which the n-hexane is evaporated off by means of a stream of hot nitrogen. A prepolymer consisting of a nonsticky powder which has the following characteristics is thus obtained:

| | |
|---|---|
| - titanium content | 236 ppm |
| - quantity of prepolymer per millimole of titanium | 210 g |
| - content of polymer soluble in boiling n-hexane | 3% |
| - bulk density | 0.410 g/cm³ |
| - mass mean diameter of the powder particles | 92 microns |
| - melt index, measured at 190°C under a 5 kg load MI$_{5/190}$ | 1.8 g/10 minutes |

Example 4

Preparation of a propylene prepolymer in suspension in n-hexane

2 litres of n-hexane and a quantity of the catalyst (C) prepared in Example 2, containing 2 millimoles of titanium, 7 millimoles of diethylaluminium chloride and 3.3 millimoles of ethyl benzoate are introduced under nitrogen into a 5-litre stainless steel reactor equipped with a stirring system rotating at 750 revolutions per minute. The reactor is then heated to 60°C and 400 g of propylene are introduced into it over 4 hours. At the end of this time the prepolymer suspension is transferred to a rotary evaporator operating under vacuum, and after evaporation of the n-hexane, a prepolymer consisting of a nonsticky powder which has the following characteristics is recovered:

| | |
|---|---|
| - titanium content | 240 ppm |
| - quantity of prepolymer obtained per millimole of titanium | 200 g |
| - bulk density | 0.410 g/cm³ |

Example 5

Preparation of a propylene prepolymer in suspension in liquid propylene

A quantity of the catalyst (C) prepared in Example 2, containing 0.6 millimoles of titanium, 0.8 millimoles of triethylaluminium, 0.4 millimoles of diethylaluminium chloride, 0.24 millimoles of methyl para-toluate, 500 g of liquid propylene and, lastly, 250 ml of hydrogen are introduced successively under a nitrogen atmosphere and at a temperature of 0°C into a 2.16-litre stainless steel reactor equipped with a stirring system rotating at 350 revolutions per minute.

The reactor is then heated to 15°C. After 15 minutes reaction the unreacted propylene is removed and 110 g of a prepolymer consisting of a nonsticky powder, which has the following characteristics, are recovered:

10

| - titanium content | 245 ppm |
|---|---|
| - quantity of prepolymer per millimole of titanium | 195 g |
| - $MI_{5/190}$ | 3.2 g/10 minutes |
| - bulk density | 0.400 g/cm$^3$ |
| - mass mean particle diameter | 78 microns |

Example 6

Preparation of a propylene and ethylene prepolymer in suspension in liquid propylene

A quantity of the catalyst (C) prepared in Example 2, containing 0.6 millimoles of titanium, 0.8 millimoles of triethylaluminium, 0.4 millimoles of diethylaluminium chloride, 0.24 millimoles of methyl para-toluate, 500 g of liquid propylene, ethylene so as to obtain a partial pressure of 0.15 MPa and, lastly, 150 ml of hydrogen are introduced successively under a nitrogen atmophere and at 0°C into a 2.18-litre stainless steel reactor equipped with a stirring system rotating at 350 revolutions per minute. The reactor is then heated to 10°C. After 20 minutes' reaction, the unreacted ethylene and propylene are removed and 120 g of a prepolymer which is in the form of a nonsticky powder and which has the following characteristics are recovered:

| - titanium content | 224 ppm |
|---|---|
| - quantity of prepolymer obtained per millimole of titanium | 214 g |
| - $MI_{5/190}$ | 2.1g/10 minutes |
| - weight content of ethylene-derived units | 10% |
| - mass-mean particle diameter | 80 microns |
| - bulk density | 0.39 g/cm$^3$ |

Example 7

Gas phase preparation of a propylene and ethylene prepolymer in a stirred-bed reactor

60 g of an inert and anhydrous powder of a propylene and ethylene prepolymer prepared previously are introduced under a nitrogen atmosphere, as a powder charge, into a 2.5-litre stainless steel reactor equipped with a stirrer for dry powder, rotating at a rate of 250 revolutions per minute. The reactor is then heated to 35°C and into it are introduced 4 millimoles of triethyl-aluminium, a quantity of catalyst (C) prepared in Example 2, containing 2 millimoles of titanium, 1 millimole of methyl para-toluate, 100 ml of hydrogen and, lastly, a gaseous mixture of ethylene and propylene in a molar proportion of 10/90 at a constant rate of 100 g/h. After 4 hours' reaction, 430 g of a prepolymer which is in the form of a powder which has good flow properties and the following characteristics are recovered.

| - titanium content | 220 ppm |
|---|---|
| - quantity of prepolymer obtained per millimole of titanium | 215 g |
| - bulk density | 0.39 g/cm$^3$ |
| - $MI_{5/190}$ | 1.90 g/10 minutes |
| - mass mean particle diameter | 80 microns |
| - weight content of ethylene-derived units | 11% |

Example 8

Gas phase preparation of a copolymer of ethylene and of propylene in a stirred-bed reactor

200 g of an inert and perfectly anhydrous copolymer of ethylene and of propylene originating from a preceding reaction are introduced under a nitrogen atmosphere, as a powder charge, into a 2.5-litre

11

stainless steel reactor equipped with a stirring system for dry powder, rotating at 250 revolutions per minute. The reactor is then heated to 35°C and into it are introduced successively 3.8 millimoles of triisobutylaluminium, 0.38 millimoles of methyl para-toluate, a quantity of prepolymer prepared in Example 5, containing 0.1 millimoles of titanium, 200 ml of hydrogen and, lastly, a gaseous mixture of propylene and ethylene in a molar proportion of 40/60 so as to obtain a total pressure of 0.3 MPa. At the end of 4 hours' reaction, the unreacted ethylene and propylene are removed and 640 g of a copolymer which is in the form of a nonsticky powder and which has the following characteristics are recovered:

| | |
|---|---|
| - weight content of ethylene-derived units | 50% |
| - titanium content millimole of titanium | 10 ppm |
| - $MI_{5/190}$ | 0.5 g/10 minutes |

Example 9

Gas phase preparation of a copolymer of ethylene and of propylene in a stirred-bed reactor.

200 g of an inert and perfectly anhydrous copolymer of ethylene and of propylene originating from a preceding reaction are introduced at ambient temperature and under a nitrogen atmosphere, as a powder charge, into a 2.5-litre stainless steel reactor equipped with a stirring system for dry powder, rotating at 250 revolutions per minute. The reactor is then heated to 30°C and into it are introduced 3 millimoles of triisobutylaluminium, 0.5 millimoles of methyl para-toluate, a quantity of prepolymer prepared in Example 6, containing 0.1 millimoles of titanium, 250 ml of hydrogen and, lastly, a gaseous mixture of ethylene and propylene in a molar proportion of 75/25 so as to obtain a total pressure of 0.4 MPa in the reactor. At the end of 4 hours' reaction, 450 g of a copolymer which is in the form of a powder which flows well and which has the following characteristics are removed:

| | |
|---|---|
| - titanium content | 10 ppm |
| - weight content of ethylene-derived units | 45% |
| - degree of polyethylene-type crystallinity | 8.2% |
| - weight mean molecular mass | 295,000 |
| - molecular mass distribution Mw/Mn | 6.4 |
| - $MI_{5/190}$ | 0.37 g/10 minutes |

Example 10

Gas phase preparation of a copolymer of propylene and of 1-butene in a stirred-bed reactor

150 g of an inert and perfectly anhydrous powdered copolymer of propylene and of 1-butene originating from a preceding reaction, as a powder charge, a quantity of prepolymer prepared in Example 3, containing 0.1 millimoles of titanium, 2 millimoles of triisobutyl-aluminium and a volume of hydrogen corresponding to a partial pressure of 0.02 MPa are introduced at ambient temperature and under a nitrogen atmosphere into a 2.6-litre stainless steel reactor equipped with a stirring system for dry powder, rotating at a rate of 250 revolutions per minute. The reactor is then heated to 50°C and into it is introduced a gaseous mixture of propylene and of 1-butene in a volume proportion of 70/30 until a total pressure of 0.25 MPa is obtained. This pressure is maintained at this value throughout the reaction by adding the propylene/1-butene mixture. At the end of 5 hours' reaction, 380 g of copolymer which is in the form of a nonsticky powder and which has the following characteristics are recovered:

| - weight content of 1-butene-derived units | 30% |
|---|---|
| - MI$_{5/190}$ | 1.92 g/10 minutes |
| - titanium content | 9.2 ppm |
| - mass mean particle diameter | 196 microns |
| - Dm/Dn = 1.8 | |

Example 11

Gas phase copolymerization of ethylene and propylene in a fluidized-bed reactor

The operation is carried out in a fluidized-bed reactor 10 cm in diameter, 1 m in height and operating with the aid of a fluidization gas comprising, on a volume basis, 46% of ethylene and 54% of propylene, at a pressure of 0.3 MPa and propelled at an upward velocity of 30 cm/s. This reactor is maintained at a temperature of 20°C and into it are introduced, as a powder charge, 100 g of an inert and perfectly anhydrous homopolypropylene, followed separately by a quantity of prepolymer prepared in Example 4, containing 0.2 millimoles of titanium, and 5 millimoles of triethylaluminium.

At the end of 6 hours' reaction, 3.5 kg of a copolymer which is in the form of a nonsticky powder and which has the following characteristics are recovered:

| - titanium content | 3 ppm |
|---|---|
| - weight content of propylene-derived units | 42% |

Example 12

Gas phase copolymerization of ethylene and propylene in a fluidized-bed reactor

The operation is carried out in a fluidized-bed reactor 10 cm in diameter, 1 m in height and operating with the aid of a fluidization gas comprising, on a volume basis, 50% of ethylene and 50% of propylene at a pressure of 0.5 MPa and propelled at an upward velocity of 35 cm/s. This reactor is maintained at a temperature of 40°C and into it are introduced, as a powder charge, 100 g of an inert and perfectly anhydrous homopolypropylene, followed separately by a quantity of prepolymer prepared in Example 7, containing 0.2 millimoles of titanium, then 6 millimoles of triethylaluminium and 0.3 millimoles of ethyl benzoate. At the end of 6 hours 30 minutes' reaction, 6 kg of a copolymer which is in the form of a nonsticky powder and which has the following characteristics are recovered:

| - titanium content | 1.6 ppm |
|---|---|
| - weight content of ethylene-derived units | 60% |

Example 13

Gas phase copolymerization of ethylene and propylene in a fluidized-bed reactor

The operation is carried out in a fluidized-bed reactor 45 cm in diameter and 6 m in height, operating with the aid of a fluidization gas comprising, on a volume basis, 32% of ethylene, 13% of propylene and 55% of nitrogen, at a total pressure of 1.2 MPa and propelled at un upward velocity of 50 cm/s. This reactor is maintained at a temperature of 20°C and into it is introduced a prepolymer prepared in Example 3 at a uniform rate of 320 g/h. 400 ml per hour of a solution containing 20 millimoles of triisobutylaluminium in n-hexane are added to the fluidization gas.

In these conditions the fluidized-bed reactor operates continuously producing approximately 8.5 kg/h of a copolymer which is in the form of a powder which has good flow properties and the following characteristics:

| - titanium content | 9 ppm |
| --- | --- |
| - weight content of ethylene-derived units | 72% |
| - bulk density | 0.46 g/cm$^3$ |

Example 14

Gas phase copolymerization of ethylene and propylene in a fluidized bed reactor

The operation is carried out in a fluidized-bed reactor 45 cm in diameter and 6 m in height, operating with the aid of a fluidization gas comprising, on a volume basis, 35% of ethylene, 32% of propylene, 40% of nitrogen and 3% of hydrogen at a total pressure of 1.2 MPa and propelled at an upward velocity of 50 cm/s. This reactor is maintained at a temperature of 20°C and into it is introduced a prepolymer prepared in Example 3 at a uniform rate of 320 g/h.

In these conditions the fluidized-bed reactor operates continuously producing approximately 10 kg/h of a copolymer which is in the form of a powder which as good flow properties and the following characteristics:

| - titanium content | 8 ppm |
| --- | --- |
| - weight content of ethylene-derived units | 55% |
| - bulk density | 0.47 g/cm$^3$ |
| - mass mean particle diameter | 450 microns |
| - weight-average molecular mass of polyethylene type | 280,000 |
| - degree of crystallinity of polyethylene type | 8% |

**Claims**

1. Process for the manufacture of copolymers containing, on a weight basis, from 20 to 80% of propylene and from 80% to 20% of ethylene and/or of 1-butene and optionally of one or more alpha-olefins containing from 5 to 12 carbon atoms, which process is characterized in that:

   1) it employs a catalyst of the Ziegler Natta type, obtained by bringing a magnesium dichloride support successively into contact with at least one electron-donor compound containing labile hydrogen $D_2$ and with an electron-donor compound $D_3$ chosen from aromatic carboxylic acid esters, and then by impregnation and activation of the support, which are produced by at least two successive operations bringing the support into contact with titanium tetrachloride in a molar quantity which is in excess relative to magnesium dichloride, which are separated by a washing with a liquid hydrocarbon, the said support being initially preactivated with an organic electron-donor compound $D_1$ free from labile hydrogen and consisting of 80 to 99 mol% of magnesium dichloride and 1 to 20 mol% of $D_1$, and being in the form of spherical particles which have a mass-mean diameter of 5 to 100 microns, a particle size distribution such that the ratio of the mass-mean diameter, Dm, to the number-mean diameter, Dn, is lower than 2 and a spherical shape defined by the fact that if D and d are respectively the large and small axis of these particles the ratio D/d is less than or equal to 1.5,

   2) and it comprises, in a first stage, a prepolymerization by bringing the said catalyst into contact with (i) at least one alpha-olefin containing from 2 to 12 carbon atoms, (ii) an external electron-donor compound $D_4$ and (iii) a cocatalyst (A) consisting of a trialkylaluminium and optionally of a small quantity of an alkylaluminium halide, and in a second stage, a gas phase copolymerization reaction performed by bringing the prepolymer prepared previously into contact with a mixture comprising propylene, ethylene and/or 1-butene, and optionally an alpha-olefin containing from 5 to 12 carbon atoms, in a proportion such that propylene represents from 20% to 80% of the total volume of the olefins to be copolymerized.

2. Process according to Claim 1, characterized in that the organic electron-donor compound $D_1$ is chosen from ethers, sulphones, sulphoxides, phosphines, thioethers, amines and amides.

14

**3.** Process according to Claim 1, characterized in that the preactivated support consists of 80 to 95 mol% of magnesium dichloride and of 5 to 20 mol% of the organic electron-donor compound $D_1$.

**4.** Process according to Claim 1, characterized in that the electron-donor compound containing labile hydrogen $D_2$ is chosen from water, alcohol and phenols.

**5.** Process according to Claim 1, characterized in that the prepolymer is obtained by polymerization of at least one alpha-olefin chosen from ethylene, propylene, 1-butene, 1-hexene, 4-methyl-1-pentene, 1-octene and 1-dodecene.

**6.** Process according to Claim 1, characterized in that the prepolymer is prepared by polymerization of a mixture of alpha-olefins containing at least 80 mol% of ethylene or of propylene.

**7.** Process according to Claim 1, characterized in that the cocatalyst (A) consists of a mixture of a trialkylaluminium with an alkylaluminium halide in a molar ratio higher than or equal to 2/1.

**8.** Process according to Claim 1, characterized in that the external electron-donor compound $D_4$ is an aromatic carboxylic acid ester or an organic silicon compound.

**9.** Process according to Claim 1, characterized in that the prepolymerization is performed in suspension in liquid propylene at a temperature ranging from 0°C to 80°C, or in suspension in a liquid saturated hydrocarbon at a temperature ranging from 20°C to 80°C, or in gaseous phase at a temperature ranging from 10°C to 60°C and at a pressure ranging from 0.1 to 5 MPa.

**10.** Process according to Claim 1, characterized in that the gas phase copolymerization is performed in a reactor containing a mechanically stirred and/or fluidized bed, at a temperature ranging from 0°C to 60°C and at a pressure ranging from 0.1 to 5 MPa.

**11.** Elastomeric copolymers of propylene with ethylene and optionally with at least one C4-C12 alpha-olefin, containing from 25% to 65% by weight of propylene, having a titanium content from 1 to 20 ppm, an intrinisic viscosity expressed in polyethylene and measured at 135°C in decalin from 2 to 11 dl/g, a molecular mass distribution from 5 to 15, a crystallinity of polyethylene type from 2 to 10%, a crystallinity of polypropylene type lower than 1%, no structural inversion of propylene units, the elastomeric copolymers being in the form of a powder having a bulk density from 0.35 to 0.52 g/cm$^3$ and consisting of spherical particles having a mass mean diameter, Dm, from 250 to 1,000 microns and a ratio of Dm to a number mean diameter, Dn, lower than 3.0 and a spherical shape defined by the fact that if D and d are respectively the large and small axis of these particles the ratio D/d is less than or equal to 1.5.

## Patentansprüche

**1.** Verfahren zur Herstellung von Copolymeren mit, auf Gewichtsbasis, 20 bis 80% Propylen und 80 bis 20% Ethylen und/oder 1-Buten und wahlweise einem oder mehreren alpha-Olefinen mit 5 bis 12 Kohlenstoffatomen, das dadurch gekennzeichnet ist, daß

1. es sich eines Katalysators vom Ziegler-Natta-Typ bedient, der durch aufeinanderfolgendes Inberührungbringen eines Magnesiumdichloridträgers mit mindestens einer Elektronendonorverbindung mit labilem Wasserstoff $D_2$ und mit einer Elektronendonorverbindung $D_3$, ausgewählt aus aromatischen Carbonsäureestern, und anschließend durch Imprägnierung und Aktivierung des Trägers hergestellt wird, welche durch mindestens zwei aufeinanderfolgende Vorgänge eines Inberührungbringens des Trägers mit Titantetrachlorid in einer molaren Menge, die relativ zu Magnesiumdichlorid im Überschuß vorliegt, gebildet werden, welche durch ein Waschen mit einem flüssigen Kohlenwasserstoff getrennt sind, wobei der Träger anfänglich mit einer organischen Elektronendonorverbindung $D_1$ ohne labilen Wasserstoff und aus 80 bis 99 Mol-% Magnesiumdichlorid und 1 bis 20 Mol-% $D_1$ voraktiviert wird und in Form kugelförmiger Teilchen vorliegt, die einen Massenmitteldurchmesser von 5 bis 100 μm und eine derartige Teilchengrößeverteilung aufweisen, daß das Verhältnis Massenmitteldurchmesser Dm/Zahlenmitteldurchmesser Dn kleiner als 2 ist, wobei eine kugelförmige Form durch die Tatsache definiert ist, daß, wenn D und d jeweils die große und kleine Achse dieser Teilchen darstellen, das Verhältnis D/d kleiner oder gleich 1,5 ist,

EP 0 409 492 B1

2. und es in einer ersten Stufe eine Präpolymerisation durch Inberührungbringen des Katalysators mit (i) mindestens einem alpha-Olefin mit 2 bis 12 Kohlenstoffatomen, (ii) einer externen Elektronendonorverbindung $D_4$ und (iii) einem Cokatalysator A aus einem Trialkylaluminium und wahlweise einer geringen Menge eines Alkylaluminiumhalogenids und in einer zweiten Stufe eine Gasphasencopolymerisationsreaktion, die durch Inberührungbringen des zuvor hergestellten Präpolymeren mit einem Gemisch, das Propylen, Ethylen und/oder 1-Buten und wahlweise ein alpha-Olefin mit 5 bis 12 Kohlenstoffatomen in einem derartigen Anteil umfaßt, daß Propylen 20 bis 80% des Gesamtvolumens der zu copolymerisierenden Olefine ausmacht, erfolgt, umfaßt.

2. Verfahren nach Anspruch 1, dadurch gekennzeichnet, daß die organische Elektronendonorverbindung $D_1$ aus Ethern, Sulfonen, Sulfoxiden, Phosphinen, Thioethern, Aminen und Amiden ausgewählt ist.

3. Verfahren nach Anspruch 1, dadurch gekennzeichnet, daß der voraktivierte Träger aus 80 bis 95 Mol-% Magnesiumdichlorid und 5 bis 20 Mol-% der organischen Elektronendonorverbindung $D_1$ besteht.

4. Verfahren nach Anspruch 1, dadurch gekennzeichnet, daß die Elektronendonorverbindung mit labilem Wasserstoff $D_2$ aus Wasser, Alkohol und Phenolen ausgewählt ist.

5. Verfahren nach Anspruch 1, dadurch gekennzeichnet, daß das Präpolymer durch Polymerisation mindestens eines alpha-Olefins, ausgewählt aus Ethylen, Propylen, 1-Buten, 1-Hexen, 4-Methyl-1-penten, 1-Octen und 1-Dodecen, erhalten wird.

6. Verfahren nach Anspruch 1, dadurch gekennzeichnet, daß das Präpolymer durch Polymerisation eines Gemisches von alpha-Olefinen mit mindestens 80 Mol-% Ethylen oder Propylen hergestellt wird.

7. Verfahren nach Anspruch 1, dadurch gekennzeichnet, daß der Cokatalysator (A) aus einem Gemisch eines Trialkylaluminiums mit einem Alkylaluminiumhalogenid in einem Molverhältnis größer oder gleich 2/1 besteht.

8. Verfahren nach Anspruch 1, dadurch gekennzeichnet, daß die externe Elektronendonorverbindung $D_4$ aus einem aromatischen Carbonsäureester oder einer organischen Siliciumverbindung besteht.

9. Verfahren nach Anspruch 1, dadurch gekennzeichnet, daß die Präpolymerisation in Suspension in flüssigem Propylen bei einer Temperatur im Bereich von 0 bis 80°C oder in Suspension in einem flüssigen gesättigten Kohlenwasserstoff bei einer Temperatur im Bereich von 20 bis 80°C oder in der Gasphase bei einer Temperatur von 10 bis 60°C und bei einem Druck im Bereich von 0,1 bis 5 MPa durchgeführt wird.

10. Verfahren nach Anspruch 1, dadurch gekennzeichnet, daß die Gasphasencopolymerisation in einem Reaktor mit einem mechanisch gerührten Bett und/oder einem Wirbelbett bei einer Temperatur im Bereich von 0 bis 60°C und einem Druck im Bereich von 0,1 bis 5 MPa durchgeführt wird.

11. Elastomere Copolymere von Propylen mit Ethylen und wahlweise mit mindestens einem $C_4$-$C_{12}$-alpha-Olefin mit 25 bis 65 Gew.-% Propylen, einem Titangehalt von 1 bis 20 ppm, einer Intrinsikviskosität, ausgedrückt in Polyethylen und bestimmt bei 135°C in Decalin von 2 bis 11 dl/g, einer Molekularmassenverteilung von 5 bis 15, einer Kristallinität vom Polyethylentyp von 2 bis 10%, einer Kristallinität vom Polypropylentyp von weniger als 1%, keinem strukturellen Einbau von Propyleneinheiten, wobei die elastomeren Copolymere in Form eines Pulvers mit einer Schüttdichte von 0,35 bis 0,52 g/cm³ vorliegen und aus kugelförmigen Teilchen bestehen, die einen Massenmitteldurchmesser Dm von 250 bis 1000 μm und ein Verhältnis Dm/Zahlenmitteldurchmesser Dn von weniger als 3,0 aufweisen, wobei eine kugelförmige Form durch die Tatsache definiert ist, daß, wenn D und d jeweils die große und kleine Achse dieser Teilchen darstellen, das Verhältnis D/d kleiner oder gleich 1,5 ist.

**Revendications**

1. Procédé pour la préparation de copolymères contenant, en poids de 20% à 80% de propylène et de 80% à 20% d'éthylène et/ou de butène-1 et, éventuellement, une ou plusieurs alpha-oléfines contenant de 5 à 12 atomes de carbone, procédé qui se caractérise par le fait

1) qu'il emploie un catalyseur du type Ziegler-Natta obtenu en mettant successivement en contact un support à base de dichlorure de magnésium avec au moins un composé donneur d'électrons contenant de l'hydrogène labile $D_2$ puis avec un composé donneur d'électrons $D_3$ choisi parmi des esters d'acide carboxylique aromatique, puis en traitant le support par imprégnation et activation, opérations réalisées sous forme d'au moins deux opérations successives mettant le support en contact avec du tétrachlorure de titane dans une proportion molaire en excès par rapport au dichlorure de magnésium, excès que l'on élimine par lavage avec un hydrocarbure liquide, ledit support étant initialilement préactivé avec un composé donneur d'électrons $D_1$ exempt d'hydrogène labile et constitué de 80 à 99 moles % de dichlorure de magnésium et de 1 à 20 moles pour cent de $D_1$, et se présentant sous forme de particules sphériques ayant un diamètre moyen en masse de 5 à 100 microns et une granulométrie telle que le rapport entre le diamètre pondéré en masse, Dm, et le diamètre moyen en nombre, Dn, est inférieur à 2 et de forme sphérique définie par le fait que si D et d sont respectivement le grand axe et le petit axe de ces particules, le rapport D/d est inférieur ou égal à 1,5,

2) et qu'il comporte, dans une première étape, une prépolymérisation par mise en contact dudit catalyseur avec (i) au moins une alpha-oléfine contenant de 2 à 12 atomes de carbone, (ii) un composé donneur d'électrons extérieur $D_4$ et (iii) un cocatalyseur (A) constitué de trialkylaluminium et, éventuellement, d'une petite proportion d'un halogénure d'alkylaluminium et, dans une seconde étape, une réaction de copolymérisation en phase gazeuse obtenue en mettant en contact le prépolymère précédemment préparé avec un mélange comprenant du propylène, de l'éthylène et/ou du butène-1 et éventuellement une alpha-oléfine contenant de 5 à 12 atomes de carbone, dans une proportion telle que le propylène représente de 20 à 80% du volume total des oléfines à copolymériser.

2. Procédé selon la revendication 1, caractérisé par le fait que l'on choisit le composé organique donneur d'électrons $D_1$ parmi des éthers, des sulfones, des sulfoxydes, des phosphines, des thioéthers, des amines et des amides.

3. Procédé selon la revendication 1, caractérisé par le fait que le support préactivé est constitué de 80 à 95 moles pour-cent de dichlorure de magnésium et de 5 à 20 moles% du composé organique donneur d'électrons $D_1$.

4. Procédé selon la revendication 1, caractérisé par le fait que l'on choisit le composé donneur d'électrons contenant de l'hydrogène labile $D_2$ parmi l'eau, un alcool et des phénols.

5. Procédé selon la revendication 1, caractérisé par le fait que le prépolymère s'obtient par polymérisation d'au moins une alpha-oléfine choisie parmi l'éthylène, le propylène, le 1-butène, le 1-hexène, le 4-méthyl-1-pentène, le 1-octène et le 1-dodécène.

6. Procédé selon la revendication 1, caractérisé par le fait que le prépolymère est préparé par polymérisation d'un mélange d'alpha-oléfines contenant au moins 80 moles% d'éthylène ou de propylène.

7. Procédé selon la revendication 1, caractérisé par le fait que le cocatalyseur (A) est constitué d'un mélange de trialkylaluminium avec un halogénure d'alklylaluminium dans un rapport molaire supérieur ou égal à 2/1.

8. Procédé selon la revendication 1, caractérisé par le fait que le composé donneur d'électrons extérieur $D_4$ est un ester d'acide carboxylique aromatique ou un composé organique du silicium.

9. Procédé selon la revendication 1, caractérisé par le fait que la prépolymérisation s'effectue en suspension dans le propylène liquide à une température comprise entre 0°C et 80°C ou en suspension dans un hydrate de carbone liquide saturé à une température comprise entre 20°C et 80°C ou en phase gazeuse à une température comprise entre 10°C et 60°C et à une pression allant de 0,1 à 5 MPa.

10. Procédé selon la revendication 1, caractérisé par le fait que la copolymérisation en phase gazeuse s'effectue dans un réacteur contenant un lit agité mécaniquement et/ou fluidisé, à une température comprise entre 0°C et 60°C et sous une pression allant de 0,1 à 5 MPa.

**11.** Copolymères élastomères du propylène avec l'éthylène et éventuellement avec au moins une alpha-oléfine en $C_4$-$C_{12}$, contenant de 25% à 65% en poids de propylène, présentant une teneur en titane de 1 à 20 ppm, une viscosité intrinsèque exprimée en polyéthylène et mesurée à 135°C dans la décaline, comprise entre 2 et 11 dl/g, une distribution de la masse moléculaire de 5 à 15, une cristallinité de type polyéthylène de 2 à 10%, une cristallinité de type polypropylène inférieure à 1%, pas d'inversion de structure des groupes propylène, les copolymères élastomères étant sous la forme d'une poudre présentant une densité apparente de 0,35 à 0,52 g/cm$^3$ et constituée de particules sphériques présentant un diamètre moyen en masse, Dm, de 250 à 1000 microns et un rapport entre Dm et le diamètre moyen en nombre, Dn, inférieur à 3,0, ainsi qu'une forme sphérique définie par le fait que, si D et d sont respectivement le grand axe et le petit axe de ces particules, le rapport D/d est inférieur ou égal à 1,5.